# EUROPÄISCHE PATENTSCHRIFT

(11) **EP 2 425 270 B1**
(45) Veröffentlichungstag und Bekanntmachung des Hinweises auf die Patenterteilung: **20.03.2013**
(21) Anmeldenummer: 10716823.9
(22) Anmeldetag: 26.04.2010
(51) Int. Cl.: G01S 3/808, G06F 3/01, H04S 7/00

(54) **VORRICHTUNG UND VERFAHREN ZUR BINAURALEN WIEDERGABE VON AUDIO-SONARSIGNALEN**
APPARATUS AND METHOD FOR THE BINAURAL REPRODUCTION OF AUDIO SONAR SIGNALS
DISPOSITIF ET PROCÉDÉ DE RESTITUTION BINAURALE DE SIGNAUX SONAR AUDIO

(30) Priorität: 29.04.2009 DE 102009019405
(43) Veröffentlichungstag der Anmeldung: 07.03.2012
(73) Patentinhaber: ATLAS Elektronik GmbH, 28309 Bremen (DE)
(72) Erfinder: SCHWARZ, Jan-Philip, 28329 Bremen (DE); SCHMIDT, Heiko, 27299 Langwedel (DE)
(74) Vertreter: Wasiljeff, Johannes M.B.
(86) Internationale Anmeldenummer: PCT/EP2010/055547
(87) Internationale Veröffentlichungsnummer: WO 2010/125029

(56) Entgegenhaltungen:
- EP-A2- 0 276 159
- DE-A1- 1 566 857
- FR-A1- 2 623 292
- US-A- 5 647 016
- US-A1- 2004 174 771
- US-A1- 2008 136 681
- ARRABITO ET AL: "Recommendations for enhancing the role of the auditory modality for processing sonar data" APPLIED ACOUSTICS, ELSEVIER PUBLISHING, GB LNKD- DOI:10.1016/J.APACOUST.2004.11.010, Bd. 66, Nr. 8, 1. August 2005 (2005-08-01), Seiten 986-1005, XP005388166 ISSN: 0003-682X
- COOKE BRIAN: "Uses of Spatial Audio in Sonar" 20020201, Nr. DCIEM NO. CR 2002-054, 1. Februar 2002 (2002-02-01), Seiten 1-39, XP002508880
- FRANCOISE BRIOLLE: "Detection and classification of the audiophonic sonar signal: Perspectives of space simulation under headphones" UNDERSEA DEFENSE TECHNOLOGY, 1991, Seiten 405-410, XP002599409
- David Zeltzer; Jeng-Feng Lee: "Research on Improved Sonar Displays:A Human/Machine Processing System"[Online] Juni 1995 (1995-06), XP002599410 The Research Laboratory of Electronics. MASSACHUSETTS INSTITUTE OF TECHNOLOGY, CAMBRIDGE RLE Technical Report No. 595 Gefunden im Internet: URL:http://dspace.mit.edu/bitstream/handle /1721.1/4158/RLE-TR-595-32851357.pdf;jsess ionid=57FA85B83EFC949996FADD38C9533D9F?seq uence=1> [gefunden am 2010-09-07]
- BEGAULT D R ET AL: "DIRECT COMPARISON OF THE IMPACT OF HEAD TRACKING, REVERBERATION, AND INDIVIDUALIZED HEAD-RELATED TRANSFER FUNCTIONS ON THE SPATIAL PERCEPTION OF A VIRTUAL SPEECH SOURCE" JOURNAL OF THE AUDIO ENGINEERING SOCIETY, AUDIO ENGINEERING SOCIETY, NEW YORK, NY, US, Bd. 49, Nr. 10, 1. Oktober 2001 (2001-10-01), Seiten 904-916, XP001132349 ISSN: 1549-4950

## Beschreibung

Die Erfindung betrifft eine Vorrichtung sowie ein Verfahren zur binauralen Wiedergabe von Audio-Sonarsignalen gemäß dem Oberbegriff des Anspruchs 1 bzw. 4.

Mit bekannten Sonaranlagen lassen sich Position, Geschwindigkeit und Kurs eines Ziels durch von dem Ziel abgestrahlte Wasserschallsignale bestimmen. Dazu werden herkömmlicherweise die Wasserschallsignale mittels einer Empfangsantenne empfangen, welche eine Vielzahl elektroakustischer oder optoakustischer Wandler zum Empfangen von Schallwellen und Erzeugen von elektrischen Empfangssignalen aufweist.

Ferner weist eine entsprechende Sonaranlage neben der Empfangsantenne mindestens einen Richtungsbildner auf, in dem die Empfangssignale der Wandler, abhängig von der Anordnung der Wandler auf der Antenne verzögert und zu Gruppensignalen bzw. zu Richtungssignalen zusammengefasst werden. Jedem Richtungssignal ist eine Hauptempfangsrichtung zugeordnet, welche jedoch durch elektronische Maßnahmen schwenkbar ist.

Aus DE 15 66 857 C3 ist das Verarbeiten von binauralen Informationen in Audio-Sonarsignalen bekannt. Für einen Operator (Bedienperson) einer Sonaranlage ist neben einer optischen Darstellung der Empfangssignale bzw. daraus abgeleiteten Signalen auch die akustische Wiedergabe der Empfangssignale bedeutungsvoll. Bei der akustischen Beobachtung der Wasserschallsignale eines Beobachtungssektors der Sonaranlage wirkt sich nämlich eine fehlende Richtungsinformation nachteilig aus. Ein gleichzeitiges Hören der Signale aus einer Vielzahl von Richtungen führt nämlich im Ergebnis zu Störungen, welche ein relativ schwaches Signal aus einer bestimmten Richtung überdecken können. Mit entsprechender Richtungsinformation kann jedoch das menschliche Gehör Geräusche ihrer Richtung nach unterscheiden und damit auch noch leise Geräusche aus unterschiedlichen Richtungen differenzieren. Dadurch kann die Leistungsfähigkeit des Operators durch eine schnellere Detektion und Klassifikation der Ziele erhöht werden. Ferner wird durch die binauralen Informationen der Audio-Sonarsignale die Unterscheidung von dicht benachbarten Zielen gefördert.

Wie aus dem Artikel: "Recommendations for enhancing the role of the auditory modality for processing sonar data" aus APPLIED ACOUSTICS, ELSEVIER PUBLISHING, GB LNKD- DOI: 10.1016/ J.APACOUST. 2004 11 010, Bd 66, Nr 8 XP005388 166, ersichtlich, gibt es zur Stärkung der auditiven Verarbeitung von Sonardaten die Möglichkeit, Sonar-Beams der Sonaranlage in einem dreidimensionalen akustischen Raum anzuzeigen. Somit ist ein Bediener der Sonaranlage in der Lage eine Mehrzahl von Sonar-Beams zu überwachen. Dazu werden dem Bediener für jedes Ohr verschiedene Signale bereitgestellt, die zuvor mittels einer kopfbezogenen Übertragungsfunktion (HRTF - Head Realated Transfer Funktion) bearbeitet wurden.

Ferner ist aus DE 15 66 857 C3 bekannt, aus den Richtungssignalen des Richtungsbildners ein linkes und ein rechtes Audiosignal zur Wiedergabe über eine binaurale Wiedergabeeinrichtung, insbesondere einen Kopfhörer, zu generieren. Dazu wird ein vorbestimmter Beobachtungssektor mittels der Sonaranlage erfasst, in dessen Mitte sich eine senkrecht zur Längsachse der Empfangsantenne weisende Haupthorchrichtung befindet. Die Empfangssignale der Schallquellen, die sich links oder rechts von dieser Haupthorchrichtung befinden, werden zur Bildung des linken Audiosignals und zur Bildung des rechten Audiosignals zur Erzeugung des binauralen Effekts unterschiedlich gewichtet und/oder verzögert. Somit entsteht ein seitlich der Haupthorchrichtung abweichender Höreindruck.

In einer natürlichen Umgebung drehen Menschen unbewusst ihren Kopf, um die exakte Position einer Schallquelle zu ermitteln. Diese mitunter minimalen Kopfbewegungen sind wichtig für ein natürliches Hören. Um dem Operator eine zufriedenstellende akustische Wahrnehmung der Audio-Sonarsignale zu ermöglichen, ist jedoch eine Rechts-/Links-Trennung der Empfangssignale nicht ausreichend.

FR 2 623 292 A1 zeigt ein Verfahren zum Lokalisieren einer Geräuschquelle mittels Hören über Kopfhorer. Dazu werden zwei Signale einer Antennenanordnung einer Sonar-Anlage auf den Kopfhorer eines Bedieners gegeben. Durch elektrisches oder mechanisches Schwenken der ganzen Antennenanordnung ist der Bediener in der Lage, die Antennenanordnung derart auszurichten, dass ein zentriertes Klangbild entsteht. D.h. die Antennen sind auf die Geräuschquelle ausgerichtet und der Winkel zur Geräuschquelle ist ablesbar US 2008/136681 zeigt ein Verfahren sowie eine Vorrichtung für das Eingeben von Buchstaben, bspw. in einen Computer, mittels Kopfbewegungen. Das Auswählen der Buchstaben einer Tastatur, die auf einem Bildschirm angezeigt wird, erfolgt über ein Erfassen der Richtung und der Geschwindigkeit der Kopfbewegung. Dazu weist die Vorrichtung einen Beschleunigungssensor auf, welcher die Kopfbewegungen erfasst, die dann mit vordefinierten Muster-Regeln verglichen werden

Der Erfindung liegt daher das Problem zugrunde, die Wahrnehmung von Audio-Sonarsignalen zu verbessern, insbesondere eine einfache Möglichkeit zur Bestimmung der Hörrichtung durch den Operator zu schaffen.

Die Erfindung löst dieses Problem durch eine Vorrichtung mit den Merkmalen des Anspruchs 1 sowie ein Verfahren mit den Merkmalen des Anspruchs 4.

Über eine Empfangsantenne einer Sonaranlage werden mittels einer Vielzahl von elektroakustischen oder optoakustischen Wandlern Wasserschallsignale empfangen und elektrische Empfangssignale erzeugt. Dabei finden als Empfangsantennen z.B. Linearantennen, Zylinderbasen oder Konformalantennen Verwendung. Bei Linearantennen sind die Wandler längs einer Geraden regelmäßig angeordnet. Bei einer Zylinderbasis sind die Wandler kreisförmig angeordnet. Unter Konformalantennen fallen bspw. Hufeisenbasen. Mittels wenigstens eines nachgeschalteten Richtungsbildners werden Schallwellen richtungsselektiv empfangen.

Die Richtungssignale des Richtungsbildners bzw. der Richtungsbildner werden erzeugt, indem die Empfangssignale der Wandler der Empfangsantenne zeitlich entsprechend einer einem Richtungssignal zugeordneten Hauptempfangsrichtung unterschiedlich verzögert und konphas ggf. unter Berücksichtigung einer Amplitudenstaffelung aufsummiert werden. Dabei ist die zeitliche Verzögerung nicht nur abhängig von der gewünschten Hauptempfangsrichtung, sondern auch von der Anordnung der Wandler auf der Empfangsantenne.

Erfindungsgemäß werden zwei Richtungssignale zur binauralen Wiedergabe von Audio-Sonarsignalen gebildet und zwar jeweils ein Richtungssignal für einen der beiden Audiokanale. Durch eine geeignete Verzogerung und Summierung der Empfangssignale der Wandler der Empfangsantenne, werden mittels des Richtungsbildners zwei Richtungssignale erzeugt. Dabei werden die beiden Richtungssignale derart erzeugt, dass sie zwei verschiedene, voneinander beabstandete akustische Schwerpunkte aufweisen, jedoch die jeweils zugeordneten Hauptempfangsrichtungen parallel zueinander verlaufen. Dabei werden zur Erzeugung dieser Richtungssignale jeweils unterschiedliche Gruppen von Wandlern zusammengefasst. Somit erfolgt vorteilhafterweise eine Stereo-Schallaufnahme bereits im Wasser. Die Schallsignale einer Schallquelle treffen zu verschiedenen Zeitpunkten auf die Wandler und erzeugen einen Stereoeindruck durch die Laufzeitdifferenz und Pegeldifferenz. Wird ein Schallsignal jedoch genau aus der Mitte der beiden Richtungssignale empfangen, so wird das Signal identisch verteilt. Der Hörer nimmt die Schallquelle genau aus der Mitte wahr.

Mittels der Sonaranlage wird ein vorbestimmter Beobachtungssektor erfasst und akustisch auf einen Abbildungssektor abgebildet. Dazu wird ein oder mehrere zugehörige Richtungssignale ausgewählt und ggf. aufsummiert und zwar derart, dass zwei Summensignale entsprechend einem linken Audiosignal und einem rechten Audiosignal gebildet werden. Dabei wird das ausgewählte Richtungssignal bzw. die aufsummierten ausgewählten Richtungssignale je nach Horchrichtung für das linke und für das rechte Audiosignal unterschiedlich verzögert und/oder gewichtet.

Bevorzugt liegen die den Richtungssignalen zugeordneten Hauptempfangsrichtungen in einer (zweidimensionalen) horizontalen akustisch überwachten Beobachtungsebene im dreidimensionalen Raum. Somit wird eine Richtung einer Schallquelle im realen Raum, vorzugsweise senkrecht, in die Beobachtungsebene projiziert und der Beobachtungssektor akustisch auf eine zweidimensionale Abbildungsebene abgebildet.

Das Lokalisieren einer Schallquelle in der Beobachtungsebene erfolgt mittels einer Verarbeitung von binauralen Informationen zu dem Audio-Sonarsignal. Zwei wichtige binaurale Merkmale sind die interaurale Zeitdifferenz (ITD = Interaural Time Difference) und die interaurale Pegeldifferenz (ILD = Interaural Level Differenz). Sie bestimmen die seitliche Einfallsrichtung des Schallsignals. Dabei beschreibt die ITD die Laufzeitdifferenz und die ILD die Pegeldifferenz des Schallsignals zwischen beiden Ohren. Mittels dieser binauralen Merkmale kann das Dämpfungsverhalten des menschlichen Gehörs und die Ausrichtung der menschlichen Ohren zu einer Schallquelle nachempfunden werden. Bei einer Wiedergabe der Audiosignale über einen Kopfhörer entsteht für den Operator der Eindruck, als würde er in die Haupthorchrichtung blicken bzw. horchen und eingehende Wasserschallsignale als Luftschallsignale über beide Ohren wahmehmen. Durch eine entsprechende Gewichtung und/oder Verzögerung der eingehenden Richtungssignale ist somit ein zweidimensionaler akustischer Höreindruck herstellbar. Dabei erfolgt sowohl die Gewichtung als auch die Verzögerung des Richtungssignals bzw. der Richtungssignale in Abhängigkeit von der Lage der gewählten Haupthorchrichtung.

Ein selbständiger Aspekt der Erfindung betrifft die Erkenntnis, dass der Mensch über die Möglichkeit der körpereigenen Richtungsbildung verfügt. Er ist in der Lage durch - ggf. auch nur kleine - Kopfbewegungen eine Richtungsbestimmung einer Schallquelle vorzunehmen. Bei der Wiedergabe des zweidimensionalen Audiosignals über einen Kopfhörer, entsteht jedoch das Problem, dass die Schallquelle den Kopfbewegungen folgt. Die Erfindung stellt daher eine elektronische Erfassung der Kopfbewegungen des Operators bereit. Mittels eines sog. Head-Tracking-Sensors, d.h. eines Sensors zur Detektion bzw. Erfassung von Kopfbewegungen, in einer tragbaren Schallwiedergabeeinrichtung, insbesondere einem Kopfhörer, werden Positionsänderungen dieser Schallwiedergabeeinrlchtung erfasst.

Erfindungsgmäß verfügt der Head-Tracking-Sensor über einen Beschleunigungsaufnehmer. Dieser erfasst Beschleunigungen von Bewegungen der Schallwiedergabeeinrichtung bzw. des Kopfes des Operators, der die Schallwiedergabeeinrichtung trägt. Dadurch lassen sich Positionsänderungen und bei Heranziehung einer Ausgangsposition somit auch eine genaue Position der Schallwiedergabeeinrichtung bzw. des Kopfes ermitteln. Der Vorteil bei der Verwendung eines Beschleunigungssensors liegt darin, dass kein externes Referenzsystem notwendig ist. Vorteilhafterweise ist der Beschleunigungsaufnehmer telemetrisch mit dem Sonarsystem verbunden, damit der Operator uneingeschränkte Bewegungsfreiheit besitzt. Vorteilhafterweise ist der Beschleunigungsaufnehmer ein 3D-Beschleunigungsaufnehmer, d.h. ein Sensor, der Beschleunigungen in allen Raumrichtungen erfassen kann. Vorzugsweise ist er auch im Stande, Drehbeschleunigungen aufzunehmen.

Somit ist auf vorteilhafter Weise eine Richtungsauswahl der Haupthorchrichtung der Sonaranlage möglich. Dazu weist der Head-Tracking-Sensor eine Schnittstelle auf, die derart ausgestaltet ist, dass die von dem Head-Tracking-Sensor erfassten Messdaten der Sonaranlage übermittelt werden. Somit werden die Audiosignale zur verbesserten akustischen Wahrnehmung auf Basis von Bewegungs- und/oder Positionsdaten des Head-Tracking-Sensors und damit des Kopfes generiert.

In einer weiteren Ausführungsform der Erfindung ist eine Eingabeeinrichtung vorgesehen. Dies kann ein Eye-Tracker, ein Touchscreen oder jede andere Einrichtung sein, mittels der ein Signal erzeugbar ist.

Für die Richtungsauswahl mittels Kopfbewegung wird zunächst mittels einer Eingabeeinrichtung, mit der ein Signal erzeugbar ist, eine grobe Vorauswahl der Horchrichtung getroffen. Dieses Signal der Eingabeeinrichtung wird als Startsignal der Sonaranlage übergeben und dient der Festlegung einer Ausgangsposition des Head-Tracking-Sensors. Damit wird eine gegenüber einer in Bezug auf die Empfangsantenne festen Bezugsrichtung schwenkbare Haupthorchrichtung festgelegt oder ein Beobachtungssektor ausgewählt. Bei einer anschließenden Bewegung des Head-Tracking-Sensors innerhalb der horizontalen Ebene kann innerhalb eines vorbestimmten Beobachtungssektors eine Lokalisation von vorhandenen Schallquellen getroffen werden.

In einer weiteren Ausführungsform der Erfindung steuern die Signale, welche durch unterschiedliche Bewegungen der Schallwiedergabeeinrichtung hervorgerufen werden, jeweils andere Funktionen. Primär dient die Erfassung der Kopfbewegungen der Richtungsauswahl der Haupthorchrichtung der Sonaranlage. Ist der Head-Tracking-Sensor in der Lage weitere Bewegungen als Messdaten zu erfassen, so lassen sich die Signale des Head-Tracking-Sensors mit vorbestimmten Funktionen belegen. Für eine Beschreibung der Kopfbewegungen stehen sechs Freiheitsgerade zu Verfügung - drei Translationsfreiheitsgerade und drei Rotationsfreiheitsgerade. Somit lassen sich sechs verschiedene Funktionen mittels der Kopfbewegung steuern. Beispielhafte Möglichkeiten wären Zeigerbewegungen auf einem Display oder ein Zoomen einer Audio-Lupe, d h. einer synthetischen Aufspreizung des Abbildungssektors.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:
- Fig. 1: ein Blockschaltbild zur Veranschaulichung der Funktionsweise zur binauralen Wiedergabe von Audio-Sonarsignalen,
- Fig. 2: eine Darstellung eines Beobachtungssektors,
- Fig. 3A-C: die möglichen Rotationsfreiheitsgerade einer Kopfbewegung,
- Fig. 4A-C: die möglichen Translationsfreiheitsgerade einer Kopfbewegung und
- Fig. 5: eine Zylinderbasis zur Stereo-Schallaufnahme im Wasser.

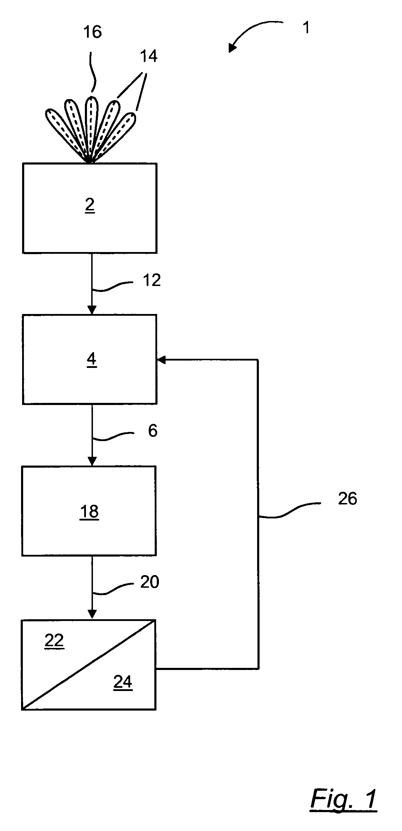

Fig. 1 zeigt ein Blockschaltbild zur Veranschaulichung der Funktionsweise zur binauralen Wiedergabe von Audio-Sonarsignalen.

Eine (nur zum Teil dargestellte) Sonaranlage 1 verfügt über eine Empfangsantenne 2, welche eine Vielzahl von elektroakustischen und/oder optoakustischen Wandlern aufweist, mit wenigstens einem nachgeschalteten Richtungsbildner 4, wodurch die Schallwellen richtungsselektiv empfangbar und elektrische Empfangssignale 6 erzeugbar sind.

Richtcharakteristiken 10 zugeordnete Richtungssignale werden erzeugt, indem die Empfangssignale 12 der Wandler der Empfangsantenne 2 zeitverzögert und konphas aufsummiert werden. Jedem Richtungssignal ist dabei eine Hauptempfangsrichtung zugeordnet. Die zeitliche Verzögerung der Empfangssignale 12 ist dabei abhängig von der gewünschten Hauptempfangsrichtung und der Geometrie der Empfangsantenne 2 und insbesondere der Anordnung der Wandler auf der Empfangsantenne 2. Für eine bestimmte Hauptempfangsrichtung ist die zeitliche Verzögerung zwischen zwei benachbarten Wandlern dabei gerade so gewählt, dass sie der Verzögerung entspricht, mit welcher eine aus einer Hauptempfangsrichtung kommende Wellenfront auf zwei benachbarte Wandler trifft.

Die Achsen 14 der Richtcharakteristiken 10 stellen deren Hauptempfangsrichtungen dar. Sie werden durch einen horizontalen Schwenkwinkel gegenüber einer antennenfesten Bezugsrichtung 16 bestimmt und können elektronisch durch Veränderung der zeitlichen Verzögerungen der Empfangssignale, d.h. durch Zeitverzögerungskoeffizienten, variiert werden.

Richtungssignale ausgewählter Richtcharakteristiken 10 werden einer Audio-Signalverarbeitung 18 übergeben. Diese generiert aus einem oder mehreren Richtungssignalen binaurale Audiosignale 20, welche entsprechend einer gewünschten Horchrichtung gewichtet und/oder verzögert und im Falle mehrerer zu verarbeitender Richtungssignale für jedes der beiden Audiosignale für den linken und den rechten Kanal gesondert aufsummiert werden. Sie werden über eine tragbare Schallwiedergabeeinrichtung 22 wiedergegeben. Die Schallwiedergabeeinrichtung 22 ist verbunden mit einem Head-Tracking-Sensor 24 zur Erfassung von Bewegungen der Schallwiedergabeeinrichtung 22. Vorliegend wird angenommen, dass es sich bei der Schallwiedergabeeinrichtung 22 bspw. um einen Kopfhörer handelt, welcher von einem Operator auf dem Kopf getragen wird. Daher sind die weiteren Ausführungen auf den Kopf des Operators bezogen.

Der Head-Tracking-Sensor 24 ist in der Lage mittels eines entsprechenden Algorithmus die aktuelle Position des Kopfes des Operators zu bestimmen. Er verfügt über einen 3D-Beschleunigungsaufnehmer, der entsprechende Signale 26 erzeugt, die den Positionen des Kopfes zugehörig sind. Diese Signale 26 werden dem Richtungsbildner 4 übergeben, der daraufhin in Abhängigkeit dieser Signale 26 eine erneute Auswahl der Richtungssignale trifft, die der nunmehrigen Kopfposition entspricht.

Die Erfindung ist jedoch nicht auf eine Auswahl von einzelnen Richtungssignalen beschränkt. Vielmehr ist es ebenso möglich, Richtungssignale in Gruppen auszuwählen, welche mittels der Audio-Signalverarbeitung 18 zu einem rechten und einem linken Audiosignal 20 verarbeitet werden.

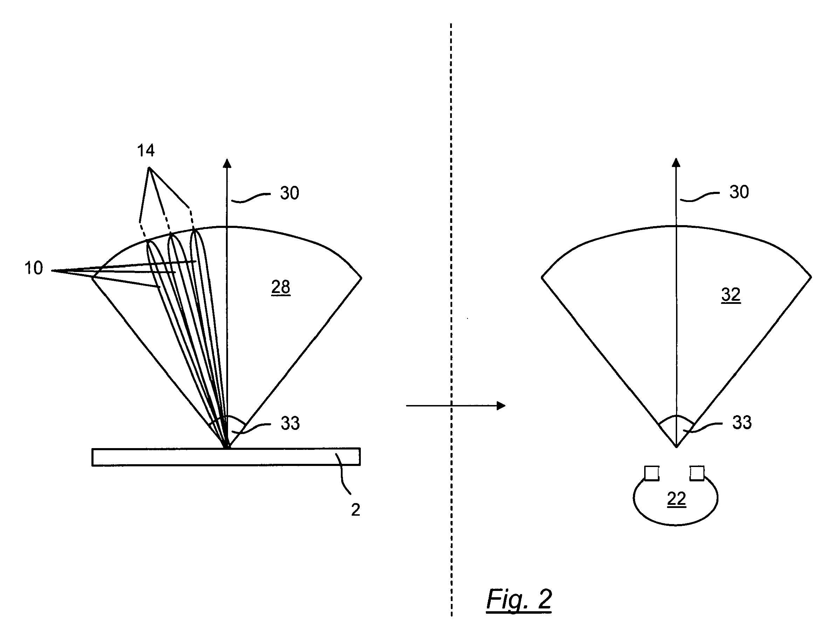

Fig. 2 zeigt eine Darstellung eines Beobachtungssektors 28, welcher durch die ausgewählten Richtcharakteristiken 10 gebildet wird. In der Mitte befindet sich eine senkrecht zur Längsachse der Empfangsantenne 2 weisende Haupthorchrichtung 30. Dieser Beobachtungssektor 28 wird akustisch auf einen Abbildungssektor 32 abgebildet. In diesem Ausführungsbeispiel besitzen der Beobachtungssektor 28 und der Abbildungssektor 32 den gleichen Öffnungswinkel 33.

Liegt eine Schallquelle in der Mitte des Beobachtungssektors 28, dann wird das der Haupthorchrichtung 30 zugeordnete Richtungssignal mittels der Audio-Signalverarbeitung 18 verarbeitet und das linke und das rechte Audiosignal 20 sind im Wesentlichen identisch. Liegt die Schallquelle links oder rechts von der Haupthorchrichtung 30, werden zur Bildung des linken und des rechten Audiosignals 20 das bzw. die entsprechenden Richtungssignale gewichtet und/oder verzögert, um dem natürlichen Höreindruck entsprechend zwei unterschiedliche Audiosignale 20 für beide Ohren zu erzeugen.

Während sich die Haupthorchrichtung 30 des Abbildungssektors 32 immer in dessen Mitte befindet, ist sie in der Beobachtungsebene 28 schwenkbar. Gemäß der Erfindung, lässt sich die Haupthorchrichtung 30 vorteilhafterweise mittels einer Kopfbewegung steuern.

Zur Beschreibung der Bewegung des Kopfes im Raum benutzt man ein ortsfestes Koordinatensystem. Vorzugsweise handelt es sich um ein kartesisches Koordinatensystem. Die Bewegung des Kopfes hat drei Rotationsfreiheitsgrade und je nach Trainingszustand der Halswirbelsäule ein, zwei oder drei Translationsfreiheitsgrade.

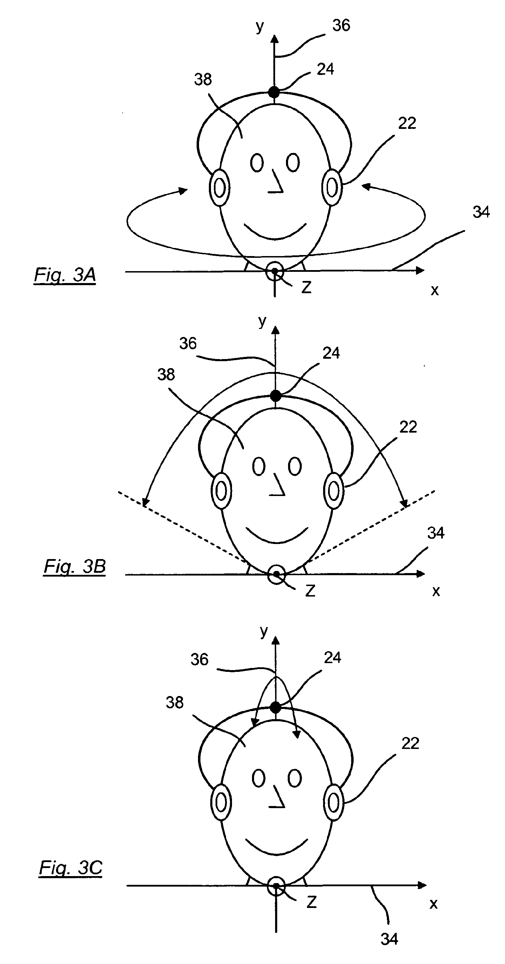

Fig. 3A-C zeigen die möglichen Rotationsfreiheitsgerade einer Kopfbewegung. Die x-Achse 34 beschreibt eine horizontale Achse und die y-Achse 36 eine vertikale Achse.

In Fig. 3A ist eine Drehbewegung eines Kopfes 38 um die y-Achse 36 dargestellt. Diese Bewegung ist erfindungsgemäß vorgesehen zur Richtungsbestimmung der Haupthorchrichtung. Die durch diese Bewegung erzeugten Signale 26 werden an den Richtungsbildner 4 zur Auswahl derjenigen Richtungssignale 10 übergeben, welche nach einer Audio-Signalverarbeitung 18 über die Kopfhörer 22 ausgegeben werden.

Da der Head-Tracking-Sensor 24 der tragbaren Schallwiedergabeeinrichtung 22 einen 3D-Beschleunigungsaufnehmer enthält, ist es möglich, weitere Bewegungen zu erfassen.

In Fig. 3B beschreibt der Kopf 38 eine Kippbewegung von links nach rechts bzw. von rechts nach links um eine senkrecht zur Zeichnungsebene stehende z-Achse. Diese Bewegung erzeugt Signale 26, wodurch beispielsweise Links/Rechtsbewegungen (bzw. Rechts-/Linksbewegungen) eines Zeigers auf einem Display steuerbar sind, um bspw. grob eine Haupthorchrichtung oder einen Beobachtungssektor anzusteuern oder auszuwählen.

In Fig. 3C ist eine Dreh- bzw. Nickbewegung des Kopfes 38 um die x-Achse 34 dargestellt. Diese Nick-Bewegung ist beispielsweise vorgesehen für eine Auswahlfunktion. Im Anschluss an eine Zeigerbewegung auf dem Display gemäß der Bewegung nach Fig. 3B besteht so bspw. die Möglichkeit durch ein Nicken mit dem Kopf 38 gemäß der Bewegung nach Fig. 3C eine Auswahl zu treffen.

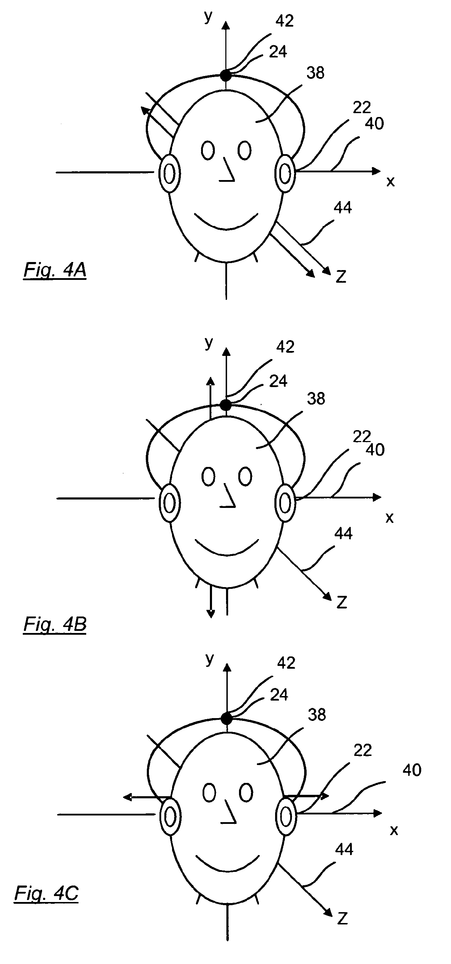

Fig. 4A-C zeigen die möglichen Translationsfreiheitsgerade einer Kopfbewegung. Dargestellt sind der Kopf 38 und ein kartesisches Koordinatensystem bestehend aus x-Achse 40, y-Achse 42 und z-Achse 44. Der 3D-Beschleunigungsaufnehmer ist nicht nur in der Lage die in Fig. 3A-C dargestellten Dreh- bzw. Nick- bzw. Kippbewegungen sondern auch translatorische Bewegungen in Richtung der drei Koordinaten aufzunehmen.

In Fig. 4A beschreibt der Kopf 38 eine Bewegung entlang der z-Achse 44. Diese Vor- bzw. Rückbewegung des Kopfes 38 ist beispielsweise vorgesehen für eine Zoomfunktion einer Audio-Lupe. Bei einer akustischen 1:1 Abbildung eines Beobachtungssektors 28 auf einen Abbildungssektor 32 entspricht der Öffnungswinkel 33 des Beobachtungssektors 28 dem Öffnungswinkel 33 des Abbildungssektors 32. Es ist jedoch vorteilhafterweise vorgesehen, den Öffnungswinkel 33 des Abbildungssektors 32 um einen Spreizfaktor Ψ größer oder kleiner als den Öffnungswinkel 33 des Beobachtungssektors 28 zu wählen. Dadurch ist eine akustische Lupe oder ein akustisches Verkleinerungsmittel bereitstellbar. Der Vorteil liegt in einer genaueren Richtungsauflösung innerhalb eines Beobachtungssektors 28, dessen Öffnungswinkel 33 kleiner als der Öffnungswinkel 33 des Abbildungssektors 32 ist. Somit ist feststellbar, ob es sich um eine einzige Schallquelle oder um mehrere Schallquellen handelt. Die durch die Kopfbewegung erzeugten Signale 26 des Head-Tracking-Sensors 24 werden einer Audio-Signalverarbeitung 18 übergeben, um anhand der Kopfbewegung den Spreizfaktor Ψ zu bestimmen.

In Fig. 4B und C sind zwei weitere mögliche Freiheitsgerade der Kopfbewegung beschrieben, in Fig. 4B eine Bewegung in Richtung der y-Achse 42 und in Fig. 4C eine Bewegung in Richtung der x-Achse 40. Da auch diese Bewegungen mittels des 3D-Beschleunigungsaufnehmers erfassbar sind, ist eine entsprechende Funktionsbelegung möglich. Allerdings ist eine Auf-/Abbewegung sowie Rechts-/Linksbewegung des Kopfes 38 abhängig von der Kopfbeweglichkeit eines Operators.

Das vorstehend beschriebene Verfahren kann dahingehend abgewandelt werden, dass eine Stereo-Schallaufnahme bereits im Wasser erfolgt.

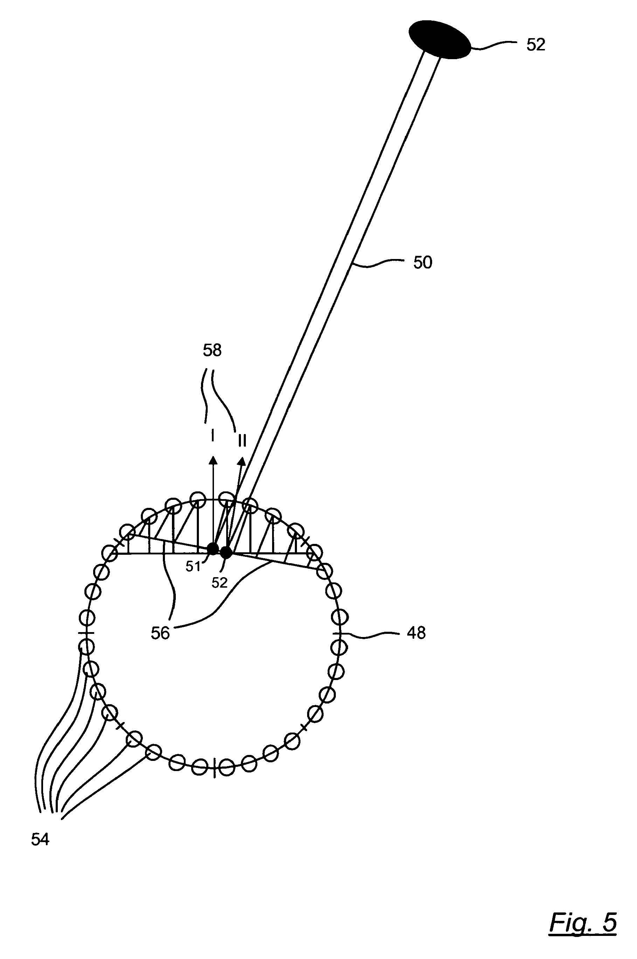

Fig. 5 zeigt eine Zylinderbasis 48 zum Erzeugen von zwei Richtcharakteristiken 10, deren Hauptempfangsrichtungen 50 parallel zueinander verlaufen, jedoch gegenüber der jeweiligen Symmetrielinie I bzw. II einer ausgewählten Gruppe von Wandlern 54 verschwenkt sind. Auf diese Weise sind die Hauptempfangsrichtungen 50 auf dasselbe Ziel 52 ausrichtbar.

Zum Bilden einer Richtcharakteristik 10 wird jeweils eine Gruppe an Wandlern 54 der Empfangsantenne 2 herangezogen. Sind diese Wandler 54 kreisförmig angeordnet, wie beispielsweise bei einer Zylinderbasis 48, können die Empfangssignale 12 der Wandler 54 je Gruppe derartig verzögert werden, als ob die Wandler 54 auf der jeweils zugehörigen Sehne 56 angeordnet wären. Diese Sehne 56 liegt senkrecht zur Symmetrielinie I bzw. II der jeweiligen Gruppe. In diesem Fall verlaufen die Hauptempfangsrichtungen entlang der jeweiligen Symmetrielinien. Damit würden die Hauptempfangsrichtungen jedoch nicht parallel zueinander verlaufen. Deshalb müssen die Empfangssignale 12 der Wandler 54 auf andere Weise verzögert werden und zwar derart, dass die Hauptempfangsrichtungen zweier unterschiedlicher Wandlergruppen parallel zueinander verlaufen.

Die Erfindung ist nicht auf Zylinderbasen 48 beschränkt. Bei alternativen Ausführungsformen kommen andere Empfangsantennen 2, wie beispielsweise Hufeisenbasen oder Linearantennen zur Anwendung. Andere Antennenanordnungen werden nach dem gleichen Prinzip behandelt. Jedoch muss stets die geometrische Anordnung der Wandler 54 berücksichtigt werden.

Der Kopf 34 des Operators besitzt mit den Ohren zwei natürliche Signalaufnehmer. Durch ein separates Berechnen der Richtungssignale für beide Signalaufnehmer, wird ein natürliches akustisches Hörempfinden nachgebildet. Für die Erzeugung eines binauralen Audio-Sonarsignals 20 werden mittels des Richtungsbildners 4 zwei Richtcharakteristiken 10 mit Wandlergruppen mit verschiedenen, voneinander beabstandeten akustischen Schwerpunkten S1 und S2 gebildet. Dazu werden je eine Anzahl Wandler 54 zu zwei Gruppen zusammengefasst und deren Empfangssignale 12 derart verzögert, dass zwei Richtungssignale entstehen mit jeweils parallel zueinander verlaufenden Hauptempfangsrichtungen 50. Um beide Richtcharakteristiken auf dasselbe Ziel 52 richten zu können, dürfen sich deren Hauptempfangsrichtungen 50 nicht bzw. lediglich in einer maximalen Empfangsentfernung kreuzen. Folglich werden die Hauptempfangsrichtungen 50 derart elektronisch verschwenkt, dass sie einen im Wesentlichen parallelen Verlauf aufweisen. Dadurch enthalten diese Richtungssignale bereits die binauralen Informationen wie Laufzeitdifferenz und Pegeldifferenz und werden in zwei Kanälen der Audio-Signalverarbeitung 18 übergeben. Diese beinhaltet Filter, wie bspw. Equalizer und dergleichen, um bspw. Störgeräusche zu unterdrücken.

Bei einer Kopfbewegung des Operators zur Richtungsbestimmung, werden die Sehnen 56 auf der Zylinderbasis 48 entsprechend verschwenkt. Eine weitere Feinpeilung übernimmt der Operator durch die Möglichkeit des körpereigenen Richtungsbildens. Somit ermöglicht ein Head-Tracking-Sensor 24 eine noch bessere Peilungsauflösung.

Alle in der vorgenannten Figurenbeschreibung, den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Vorrichtung zur binauralen Wiedergabe von Audio-Sonarsignalen (20), welche mittels einer Sonaranlage mit einer eine Vielzahl von elektroakustischen und/oder optoakustischen Wandlern (54) aufweisenden Empfangsantenne (2) mit wenigstens einem nachgeschalteten Richtungsbildner (4) zum richtungsselektiven Empfangen von Schallwellen und Erzeugen von elektrischen bzw. optischen Empfangssignalen (6) generierbar und mittels einer binauralen Audio-Signalverarbeitung (18) modifizierbar sind,
wobei der
Richtungsbildner (4) derart ausgebildet ist, um zwei Richtungssignale mit jeweils zugeordneten zueinander parallelen Hauptempfangsrichtungen (50) und voneinander beabstandet angeordneten, akustischen Schwerpunkten (S1, S2) zu erzeugen, wobei die Vorrichtung
eine tragbare Schallwiedergabeeinrichtung (22), insbesondere einen Kopfhörer umfasst, **dadurch gekennzeichnet, dass** die tragbare Schallwiedergabeeinrichtung (20) einen Head-Tracking-Sensor (24) zur Erfassung von Positionsänderungen der Schallwiedergabeeinrichtung (22) aufweist,
wobei der Head-Tracking-Sensor (24) einen Beschleunigungsaufnehmer zur Erfassung von Beschleunigungen von Bewegungen der Schallwiedergabeeinrichtung (22) aufweist,
wobei mittels des Head-Tracking-Sensors (24) den Positionsänderungen der tragbaren Schallwiedergabeeinrichtung (22) zugehörige Signale (26) erzeugbar sind
und wobei anhand der erzeugten Signale (26) mittels des Richtungsbildners (4) eine Richtung der zu empfangenen Schallwellen auswählbar ist.

2. Vorrichtung nach Anspruch 1,
**gekennzeichnet durch**
eine Eingabeeinrichtung, insbesondere einen Eye-Tracker oder ein Touchscreen, zum Auswählen einer Startposition der tragbaren Schallwiedergabeeinrichtung (22), insbesondere einer schwenkbaren Haupthorchrichtung (30) der Empfangsantenne (2) und/oder eines Beobachtungssektors (28) der Sonaranlage.

3. Vorrichtung nach einem der vorhergehenden Ansprüche,
**dadurch gekennzeichnet, dass**
zusätzlich zur Richtungsauswahl weitere Funktionen mittels der Signale (26) des Head-Tracking-Sensors (24) steuerbar sind, insbesondere Zeigerbewegungen auf einem Display und/oder ein Zoomen einer Audio-Lupe.

4. Verfahren zum binauralen Wiedergaben von Audio-Sonarsignalen (20), welche mittels einer Sonaranlage mit einer eine Vielzahl von elektroakustischen und/oder optoakustischen Wandlern (54) aufweisenden Empfangsantenne (2) mit wenigstens einem nachgeschalteten Richtungsbildner (4) zum richtungsselektiven Empfangen von Schallwellen und Erzeugen von elektrischen bzw. optischen Empfangssignalen (6) generiert werden und mittels einer binauralen Audio-Signalverarbeitung (18) modifiziert werden,
wobei
mittels des Richtungsbildners (4) zwei Richtcharakteristiken (10) mit jeweils zugeordneten zueinander parallelen Hauptempfangsrichtungen (50) und voneinander beabstandet angeordneten, akustischen Schwerpunkten (S1, S2) erzeugt werden, **dadurch gekennzeichnet, dass**
Positionsänderungen einer tragbaren Schallwiedergabeeinrichtung (22), insbesondere eines Kopfhörers, mittels eines Head-Tracking-Sensors (24) erfasst werden, welcher einen Beschleunigungsaufnehmer zur Erfassung von Beschleunigungen von Bewegungen der Schallwiedergabeeinrichtung (22) aufweist,
Signale (26) mittels des Head-Tracking-Sensors (24) erzeugt werden, die den Positionsänderungen der tragbaren Schallwiedergabeeinrichtung (22) zugehörig sind und
eine Richtung der zu empfangenen Schallwellen mittels des Richtungsbildners (4) anhand der erzeugten Signale (26) ausgewählt wird.

5. Verfahren nach Anspruch 4,
**dadurch gekennzeichnet, dass**
eine Startposition der tragbaren Schallwiedergabeeinrichtung (22) insbesondere eine schwenkbare Haupthorchrichtung (30) der Empfangsantenne (2) und/oder ein Beobachtungssektor (28) der Sonaranlage mittels einer Eingabeeinrichtung, insbesondere eines Eye-Trackers oder eines Touchscreens, ausgewählt wird.

6. Verfahren nach einem der Ansprüche 4 bis 5,
**dadurch gekennzeichnet, dass**
die Signale (26) des Head-Tracking-Sensors (24) zusätzlich zur Richtungsauswahl weitere Funktionen steuern, insbesondere Zeigerbewegungen auf einem Display und/oder ein Zoomen einer Audio-Lupe.

## Claims

1. A device for the binaural reproduction of audio sonar signals (20) that can be generated by a sonar system with a receiving antenna (2) comprising a plurality of electroacoustic and/or optoacoustic converters (54) with at least one direction former (4) connected at the outlet side for the direction-selective receiving of sound waves and the generating of electrical and/or optical incoming signals (6) and can be modified by a binaural audio signal processing (18), whereby the direction former (4) is constructed in such a manner as to generate two direction signals each with associated main incoming directions (50) that are parallel to one another and acoustic points of concentration (S1, S2) arranged at a distance from one another, whereby the device comprises a portable sound reproduction device (22), in particular an earphone, **characterized in that** the portable sound reproduction device (22) comprises a head tracking sensor (24) for detecting changes of position of the sound reproduction device (22), whereby the head tracking sensor (24) comprises an accelerometer for detecting accelerations of movements of the sound reproduction device (22),
whereby signals (26) associated with the positional changes of the portable sound reproduction device (26) can be generated by the head tracking sensor (24),
and whereby a direction of the sound waves to be received can be selected using the generated signals (26) by the direction former.

2. The device according to claim 1,
**characterized by**
an input device, in particular an eye tracker or a touchscreen for selecting a start position of the portable sound reproduction device (22) in particular of a pivotable main listening device (30) of the incoming antenna (2) and/or of an observation sector (28) of the sonar system.

3. The device according to one of the previous claims,
**characterized in that**
in addition to the selection of direction, other functions can be controlled by the signals (26) of the head tracking sensor (24), in particular pointer movements on a display and/or a zooming of an audio magnifier.

4. A method for the binaural reproduction of audio sonar signals (20) that are generated by a sonar system with a receiving antenna (2) comprising a plurality of electroacoustic and/or optoacoustic converters (54) with at least one direction former (4) connected at the outlet side for the direction-selective receiving of sound waves and the generating of electrical and/or optical incoming signals (6) and are modified by a binaural audio signal processing (18), whereby two directional characteristics (10) each with associated main receiving directions (50) parallel to one another and with acoustic points of concentration (S1, S2) arranged at a distance from one another are generated by the direction former (4),
**characterized in that**
positional changes of a portable sound reproduction device (22), in particular of an earphone, are detected by a head tracking sensor (24) that comprises an accelerometer for detecting accelerations of movements of the sound reproduction device (22),
signals (26) are generated by the head tracking sensor (24) that are associated with the positional changes of the portable sound reproduction device (22), and
a direction of the sound waves to be received is selected by the direction former (4) using the generated signals (26).

5. The method according to claim 4,
**characterized in that**
a starting position of the portable sound reproduction device (22), in particular a pivotable main listening direction (30) of the receiving antenna (2) and/or an observation sector (28) of the sonar system is selected by an input device, in particular an eye tracker or a touchscreen.

6. The method according during to one of claims 4 to 5,
**characterized in that**
the signals (26) of the head tracking sensor (24) control other functions in addition to the direction selection, in particular pointer movements on a display and/or a zooming of an audio magnifier.

## Revendications

1. Dispositif de restitution binaurale de signaux sonar audio (20), qui peuvent être générés au moyen d'une installation sonar avec une antenne de réception (2) présentant une pluralité de transducteurs électroacoustiques et/ou opto-acoustiques (54) avec au moins un générateur de direction (4) placé en aval pour la réception sélective en fonction de la direction d'ondes sonores et la génération de signaux de réception (6) électriques ou optiques et qui peuvent être modifiés au moyen d'un traitement de signaux audio (18) binaural,
dans lequel
le générateur de direction (4) est conçu de façon à générer deux signaux de direction auxquels sont respectivement assignées des directions de réception principales (50) parallèles les unes aux autres et avec des centres de gravité acoustiques (S1, S2) disposés espacés les uns des autres, dans lequel le dispositif comprend un dispositif de reproduction sonore (22) portable, en particulier un casque d'écoute,
**caractérisé en ce que** le dispositif de reproduction sonore (22) portable présente un capteur de suivi de tête (24) pour la détection de changements de position du dispositif de reproduction sonore (22),
dans lequel le capteur de suivi de tête (24) présente un capteur d'accélération pour la détection d'accélérations de mouvements du dispositif de reproduction sonore (22),
dans lequel, au moyen du capteur de suivi de tête (24), des signaux (26) associés aux changements de position du dispositif de reproduction sonore (22) portable peuvent être générés
et dans lequel, en se basant sur les signaux (26) générés, une direction des ondes sonores à recevoir peut être sélectionnée au moyen du générateur de direction (4).

2. Dispositif selon la revendication 1,
**caractérisé par**
un dispositif d'entrée, en particulier un oculomètre ou un écran tactile, pour la sélection d'une position de départ du dispositif de reproduction sonore (22) portable, en particulier d'une direction d'écoute principale (30) pivotante de l'antenne de réception (2) et/ou d'un secteur d'observation (28) de l'installation sonar.

3. Dispositif selon l'une des revendications précédentes,
**caractérisé en ce qu'**
en plus de la sélection de direction, d'autres fonctions peuvent être commandées au moyen des signaux (26) du capteur de suivi de tête (24), en particulier des mouvements d'aiguille sur un écran et/ou un zoom d'une loupe acoustique.

4. Procédé de restitution binaurale de signaux sonar audio (20), qui sont générés au moyen d'une installation sonar avec une antenne de réception (2) présentant une pluralité de transducteurs électroacoustiques et/ou opto-acoustiques (54) avec au moins un générateur de direction (4) placé en aval pour la réception sélective en fonction de la direction d'ondes sonores et la génération de signaux de réception (6) électriques ou optiques et qui sont modifiés au moyen d'un traitement de signaux audio (18) binaural,
dans lequel
au moyen du générateur de direction (4), deux caractéristiques directionnelles (10) auxquelles sont respectivement assignées des directions de réception principales (50) parallèles les unes aux autres et avec des centres de gravité acoustiques (S1, S2) disposés espacés les uns des autres, sont générées,
**caractérisé en ce que**
des changements de position d'un dispositif de reproduction sonore (22) portable, en particulier d'un casque d'écoute, sont détectés au moyen d'un capteur de suivi de tête (24), qui présente un capteur d'accélération pour la détection d'accélérations de mouvements du dispositif de reproduction sonore (22),
des signaux (26) sont générés au moyen du capteur de suivi de tête (24), qui sont associés aux changements de position du dispositif de reproduction sonore (22) portable et
une direction des ondes sonores à recevoir est sélectionnée au moyen du générateur de direction (4) en se basant sur les signaux (26) générés.

5. Procédé selon la revendication 4,
**caractérisé en ce qu'**
une position de départ du dispositif de reproduction sonore (22) portable en particulier une direction d'écoute principale (30) pivotante de l'antenne de réception (2) et/ou un secteur d'observation (28) de l'installation sonar est sélectionnée au moyen d'un dispositif d'entrée, en particulier d'un oculomètre ou d'un écran tactile.

6. Procédé selon l'une des revendications 4 à 5,
**caractérisé en ce que**
les signaux (26) du capteur de suivi de tête (24) en plus de la sélection de direction commandent d'autres fonctions, en particulier des mouvements d'aiguille sur un écran et/ou un zoom d'une loupe acoustique.
